# EUROPÄISCHE PATENTSCHRIFT

(11) **EP 1 444 131 B1**
(45) Veröffentlichungstag und Bekanntmachung des Hinweises auf die Patenterteilung: **23.08.2006**
(21) Anmeldenummer: 02802654.0
(22) Anmeldetag: 06.11.2002
(51) Int. Cl.: B64D 45/00, H04B 7/185, G08G 5/00

(54) **ÜBERWACHUNGS- UND STEUERSYSTEM FÜR BEMANNTE FAHRZEUGE**
MONITORING AND CONTROL SYSTEM FOR MANNED VEHICLES
SYSTEME DE SURVEILLANCE ET DE COMMANDE POUR VEHICULES HABITES

(30) Priorität: 06.11.2001 DE 10154400
(43) Veröffentlichungstag der Anmeldung: 11.08.2004
(73) Patentinhaber: Fom Future Office Management GmbH, 69126 Heidelberg (DE)
(72) Erfinder: WEINECK, Johannes, Wolfgang, 69253 Heiligkreuzsteinach (DE)
(74) Vertreter: Kuhnen & Wacker
(86) Internationale Anmeldenummer: PCT/EP2002/012394
(87) Internationale Veröffentlichungsnummer: WO 2003/039955

(56) Entgegenhaltungen:
- WO-A-00/44580
- DE-A- 19 960 394
- FR-A- 2 584 842

## Beschreibung

Die Erfindung betrifft ein Überwachungs- und Steuersystem für bemannte Fahrzeuge, vornehmlich solche, welche nicht schienengebunden sind und im Normalbetrieb von einem Führerstand aus oder von einem Autopiloten-Leitstand aus auf einem weitgehend willkürlich beeinflußbaren Kurs zwischen einem Startort und einem Zielort bewegt werden.

Es ist allgemein bekannt, daß unvorhergesehene Zwischenfälle während der Vorbereitung des Starts, während der Fahrt zwischen Start und Ziel und auch am Zielort eine große Gefährdung für die Besatzung, für Fahrzeugpassagiere, für die Ladung und auch für unbeteiligte Dritte auf dem Weg des Fahrzeugs zwischen Start und Ziel verursachen können.

Beispiele für derartige unvorhergesehene Zwischenfälle sind Beschädigungen am Fahrzeug durch Kollisionen, durch Verlagerung der Ladung, durch Witterungseinflüsse und dergleichen in solchem Maße, daß das Fahrzeug durch Steuerung durch den Fahrzeugführer nicht mehr manövrierfähig ist. Weitere Beispiele für unvorhergesehene Zwischenfälle sind Einflußnahmen durch unerkannt kriminelle Mitglieder der Besatzung, unerkannt kriminelle Passagiere oder eine Einflußnahme von außen über Fernwirkkanäle wiederum durch kriminelle Kreise. In Betracht kommen hier auch akute Notfälle durch Krankheit, Vergiftung, Druckabfall und dergleichen mehr.

Seit langem bekannt sind Überwachungs- und Steuersysteme für Schienenfahrzeuge, die eine sogenannte Totmanntaste enthalten, die vom Lokomotivführer in bestimmten Zeitabständen betätigt werden muß, damit die Aufmerksamkeit und gesundheitliche Unversehrtheit des Lokomotivführers überprüft wird. Erfolgt die Betätigung nicht, so wird eine Notbremsung des betreffenden Zuges ausgelöst.

Weiter allgemein bekannt sind Autopilotensysteme für Luftfahrzeuge, die über beträchtliche Zeitdauer bzw. Wegstrecken entsprechend einem vorgegebenen Kurs in vorgegebener Höhe automatisch gesteuert werden, sobald der Pilot vom Handbetrieb auf den Autopilotenbetrieb umschaltet. Solche Autopilotensysteme haben sich in vielen Notsituationen bewährt, sind jedoch nicht dem Zugriff durch Flugzeugentführer, Geiselnehmer und dergleichen Kriminelle entzogen. Für Auto-piloten von Wasserfahrzeugen gelten ganz ähnliche Einschränkungen.

Aus der DE 19960394 A1 ist ein Überwachungs- und Steuersystem für Flugzeuge bekannt, bei welchem Flugzeugzustands-Istdaten über einen Satelitenübertragungsweg zu einer Bodenstation übertragen werden und dort für eine bestimmte Zeitdauer, beispielsweise für die Zeitdauer des gesamten Fluges oder für eine be-grenzte Zeitdauer unter ständigem Überschreiben früherer Daten, gespeichert wer-den. Abhängig von einem bestimmten Ergebnis der Auswertung der Flugzeugzu-stands-Istdaten, beispielsweise, wenn Fehlfunktionen im Flugzeug auftreten, kann das Flugzeug von der Bodenstation aus ferngesteuert werden.

Bei den bekannten Systemen ist von Nachteil, daß in vielen Fällen die Entstehungsgeschichte einer Notfallsituation, also etwa eines Ausbleibens einer ordnungsgemäßen Fahrzeuglenkung vom Führerstand aus, nicht berücksichtigt wird und daher im allgemeinen Notmaßnahmen so spät eingeleitet werden, daß gravie-render Schaden nicht mehr verhindert werden kann.

Durch die Erfindung soll die Aufgabe gelöst werden, ein Überwachungs- und Steuersystem für bemannte Fahrzeuge so auszugestalten, daß eine automatische Früherkennung von Notfällen und eine automatische Maßnahmenvorgabe entsprechend einer ei-genständigen Eskalationseinstufung bezüglich der Entwicklung des betreffenden Notfalls möglich ist.

Diese Aufgabe wird erfindungsgemäß durch die Merkmale des anliegenden Patentanspruches 1 gelöst.

Vorteilhafte Ausgestaltungen und Weiterbildungen sind Gegenstand der dem Anspruch 1 nachgeordneten Ansprüche, deren Inhalt hierdurch ausdrücklich zum Bestandteil der Beschreibung gemacht wird, ohne an dieser Stelle den Wortlaut zu wiederholen.

Vor dem Eintritt in eine detaillierte Beschreibung von Ausführungsformen sei hier allgemein festgestellt, daß das vorgeschlagene Überwachungs- und Steuer-system sich nicht auf die Zuordnung eines einzelnen Fahrzeugs zu einer einzelnen Bodenstation und zu einem einzelnen Satz von Satelliten bezieht, sondern daß ein Netz von Bodenstationen eine Vielzahl von beteiligten Nachrichtenübertragungs-satelliten und ein Netz von Auswertstationen vorgesehen sein können, die eine Zuordnung zu einer außerordentlich großen Anzahl von überwachten und notfall-gesteuerten Fahrzeugen erfahren und zu diesem Zwecke im Multiplexbetrieb oder im Vielkanalbetrieb arbeiten, wobei die hierzu notwendigen Vorkehrungen und Einrichtungen dem Fachmann an sich geläufig sind.

In den anliegenden Zeichnungen zur Erläuterung von Ausführungsbeispielen stellen dar:
- Fig. 1:: eine schematische Situationsskizze mit einem im Flug befindlichen Flugzeug in der Reichweite eines GPS-Systems, eines Datenübertragungssatelliten und einer Bodenstation;
- Fig. 2:: eine schematische Darstellung eines Datenpakets zur ständig wiederkehrenden Übertragung von einem Fahrzeug zu einer Bodenstation;
- Fig. 3:: eine schematische, mehr ins Einzelne gehende Skizze der auf dem Fahrzeug befindlichen Teile des Überwachungs- und Steuersystems der hier vorgeschlagenen Art;
- Fig. 4:: ein stark vereinfachtes Blockschaltbild eines Autopiloten-Leitstandes mit wählbaren Sonder-Autopilotenprogrammen; und
- Fig. 5:: ein schematisches Schaltbild einer akustischen Auswerteinheit in dem Systemteil nach Fig. 3.

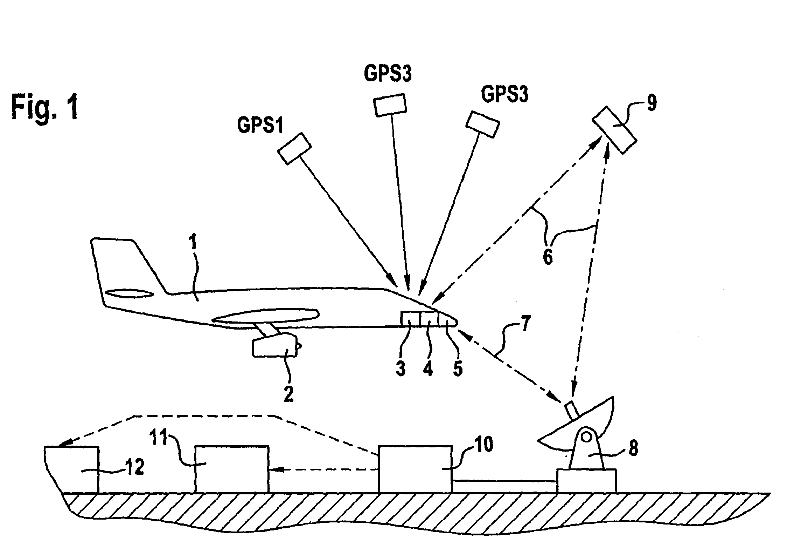

Das in Fig. 1 gezeigte Flugzeug 1 enthält als Antriebseinrichtung Stahltriebwerke 2 sowie eine auf diese und auf Steuerflächen der Flügel und des Leitwerks einflußnehmende Steuereinrichtung 3 sowie eine Navigationseinrichtung 4, welche Informationsdaten zur Positionsbestimmung und zur Bestimmung des Fahrzeugzustandes einsammelt, derart, daß der Pilot vom Cockpit aus die Steuereinrichtung zur Steuerung eines bestimmten Kurses auf einen Zielort hin betätigen kann. In dem Flugzeug 1 ist außerdem ein Autopiloten-Leitstand installiert, welcher auf einen Umschaltbefehl des Piloten hin die Betätigung der Steuereinrichtung übernimmt.

Die Navigationseinrichtung 4 enthält eine Inertialplattform oder einen Kreiselkompaß zur Lieferung von Bezugsgrößen für die Fluglagenbestimmung. Außerdem ist die Navigationseinrichtung 4 mit einer Antennenanordnung 5 verbunden, die beispielsweise in der Rumpfspitze befindliche Antennen oder in Räumen an der Kabinendecke untergebrachte Antennen enthalten kann. Über die Antennen der Antennenanordnung 5 empfängt das Flugzeug 1 Ortungssignale zur fortlaufenden Positionsbestimmung von Satelliten GPS 1, GPS 2, GPS 3. Außerdem steht das Flugzeug 1 über bidirektionale Datenübertragungskanäle 6 und 7 mit einer Bodenstation 8 in Verbindung, welche Teil eines insbesondere globalen Netzes von Bodenstationen ist. Der bidirektionale Datenübertragungskanal 7 verläuft unmittelbar zwischen dem Flugzeug 1 und der Bodenstation 8, während der bidirektionale Datenübertragungskanal 6 in der dargestellten Weise über einen Kommunikationssatelliten 9 geführt ist. Der Kommunikationssatellit 9 kann auch dem System aus den Satelliten GPS 1 bis GPS 3 angehören.

Die Bodenstation 8 kann über Kabelverbindungen oder Funkverbindungen mit Auswerteinrichtungen 10, 11, 12 usw. verbunden sein, wobei diese Auswerteinrichtungen von der Navigationseinrichtung des Flugzeugs 1 eingesammelte Informationsdaten auswerten oder aber eine zusätzliche Auswertung vornehmen, falls die Informationseinrichtung bereits eine bordeingene Auswerteinrichtung enthält, derart, daß Datenpakete mit zumindest teilweise bereits ausgewerteten Informationsdaten von dem Flugzeug zu der Bodenstation 8 übertragen werden.

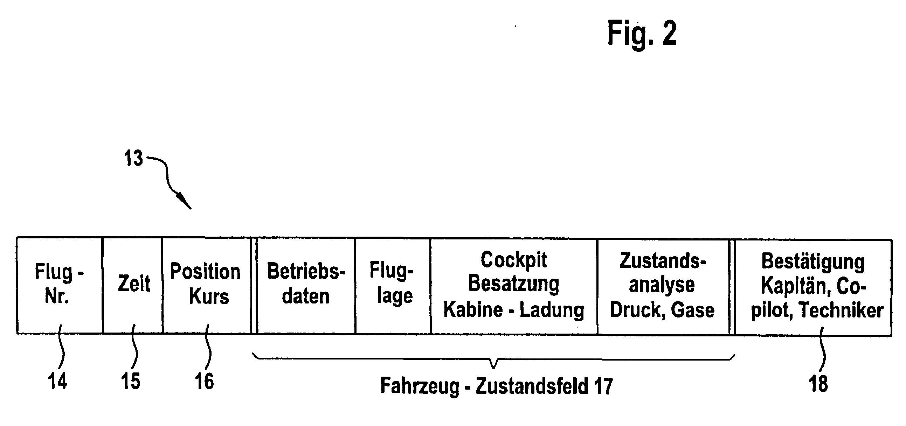

Datenpakete der hier betrachteten Art sind schematisch in Fig. 2 dargestellt und mit 13 bezeichnet. Mittels einer in Fig. 1 nicht dargestellten Sende- bzw. Empfangseinrichtung des Flugzeuges 1 werden Datenpakete 13 über den Kommunikationssatelliten 9 auf dem Datenübertragungsweg 6 zu der Bodenstation 8 übertragen. Die Datenpakete enthalten ein Fahrzeugkennzeichenfeld oder Flugnummemfeld 14, ein den Übertragungszeitpunkt kennzeichnendes Zeitanzeigefeld 15, ein fortlaufend aktualisiertes, die augenblickliche Position und den augenblicklichen Kurs angebendes Positionsfeld 16 und schließlich ein fortlaufend aktualisiertes Fahrzeug-Zustandsfeld 17.

Das Fahrzeug-Zustandsfeld 17 enthält Informationsdaten bezüglich des Betriebszustandes der Triebwerke, bezüglich der Ist-Position, der Steuerflächen von Leitwerk und Flügel und dergleichen. Ferner enthält das Fahrzeug-Zustandsfeld 17 auch die jeweilige Fluglage kennzeichnende Daten, die von der Inertialplattform oder dem Gyro des Flugzeugs abgeleitet werden. Fernerhin enthält das Feld 17 optischen und akustischen Informationen entsprechende Daten zur Beschreibung des Zustandes im Cockpit, des Zustandes der Besatzung, des Zustandes von Passagieren in der Kabine und bezüglich des Ladungszustandes. Außerdem können die Informationsdaten auch Zustandsanalyseergebnisse, Gasanaylseergebnisse, Druckmesswerte und dergleichen umfassen.

An das Fahrzeug-Zustandsfeld 17 des Datenpaketes 13 schließt sich noch ein Fahrzeugführer-Bestätigungsfeld an, welches Daten enthält, die durch eine bestimmte Eingabe durch den Piloten an einer Eingabestelle erzeugt und an das Fahrzeug-Zustandsfeld 17 dann angefügt werden. Diese Eingabe kann durch Bestätigungszusatzeingaben des Kopiloten oder des Technikers ergänzt werden. Das in Fig. 2 mit 18 bezeichnete Fahrzeugführer-Bestätigungsfeld kann gemäß einer Weiterbildung eine digitale Signatur sein, die der Flugkapitän an den digitalen Daten der Felder 14 bis 17 anbringt.

Stellt sich bei der Auswertung des Datenpaketes 13 in der Bodenstation 8 heraus, daß das Fahrzeugführer-Bestätigungsfeld 18 vom Piloten nicht ordnungsgemäß angebracht worden ist oder überhaupt nicht vom Piloten angefügt wurde oder aber vom Piloten, vom Kopiloten und vom technischen Offizier nicht in regulärer Übereinstimmung angebracht wurde, dann deutet sich bei der Auswertung des Datenpakets 13 das Vorliegen eines Notfalles unabhängig vom Dateninhalt der Felder 14 bis 17 an.

Hat das Fahrzeugführer-Bestätigungsfeldes 18 aber bei jeder Datenpaketübertragung zur Bodenstation, beispielsweise im zeitlichen Abstand von 10 Minuten, eine erwartete ordnungsgemäße Gestalt und einen erwarteten ordnungsgemäßen Inhalt, so ist dies als ein erstes Auswertergebnis zu bezeichnen, das bewirkt, das die Datenpakete über eine bestimmte, begrenzte Zeitdauer in der Bodenstation gespeichert werden und die Speicherung im Takt der Übertragung der Datenpakete aktualisiert wird, wobei ausgewählte Daten zusätzlich fortlaufend über eine längere Zeitdauer gespeichert werden können.

Ergibt sich aber bei der Auswertung des Fahrzeugführer-Bestätigungsfeld 18 eine Regelabweichung bezüglich Form oder Inhalt, so ist dies als ein zweites Auswertergebnis zu bezeichnen, das nun eine fortlaufende Speicherung der Datenpakete in der Bodenstation auslöst, ohne daß ältere Datenpakete durch neuere Datenpakete ersetzt werden. Die Speicherung erfolgt fortlaufend über eine größere Zeitdauer, um in der Bodenstation 8 die Möglichkeit zu eröffnen, den Werdegang einer Notsituation zu verfolgen.

Gleichzeitig mit der Feststellung einer Unregelmäßigkeit im Fahrzeugführer-Bestätigungsfeld 18 durch die Auswerteinrichtung der Bodenstation wird dort ein Umschaltsignal gebildet und über den Datenübertragungsweg 6 sowie den Satelliten 9 oder auch über den direkten Datenübertragungskanal 7 zu dem Fahrzeug übertragen. Dieses Umschaltsignal bewirkt, daß die Steuereinrichtung des Flugzeugs 1 von der Kopplung mit dem Cockpit auf eine vom Cockpit aus nicht beeinflußbare Kopplung mit dem Autopiloten-Leitstand umgeschaltet wird. Eine Rückschaltung auf die Kopplung der Steureinrichtung mit dem Cockpit ist vom Führerstand aus nicht mehr vorzunehmen und kann nur durch ein Rückschaltsignal erfolgen, das von der Bodenstation dann erzeugt wird, wenn die Überprüfung des Fahrzeugführer-Bestätigungsfeld 18 des nächsten übertragenen Datenpaketes ein diese Rückschaltung rechtfertigendes Auswertergebnis zeigt, welches als drittes Auswertergebnis zu bezeichnen ist. Dieses dritte Auswertergebnis braucht keineswegs mit dem ersten Auswertergebnis übereinzustimmen. Es kann vielmehr auch strengeren Auswertkriterien genügen müssen, etwa derart, daß in dem Fahrzeugführer-Bestätigungsfeld neben der Bestätigung das ordnungsgemäßen Zustandes des Fahrzeuges durch den Flugkapitän auch noch das Ergebnis einer Stimmenanalyse und/oder einer Spracherkennungsanalyse oder dergleichen positiv sein muß bzw. müssen.

Wenn zu befürchten ist, daß die Informationsübertragung auf den Datenübertragungswegen 6 und 7 abgehört, gestört oder verfälscht wird, so kann die Datenübertragung auf diese Wegen kodiert bzw. verschlüsselt erfolgen. Eine Datenkompression ermöglicht ferner die Erhöhung des Taktes der Datenpaketübertragung.

Zweckmäßig wird dann, wenn das zweite Auswertergebnis, also ein Abweichung des Inhalts des Fahrzeugführer-Bestätigungsfeld 18 von ordnungsgemäßer Form oder ordnungsgemäßem Inhalt, auftritt, die Zeittacktfrequenz der Datenpaketübertragung erhöht, damit Informationslücken bei der Überprüfung oder der Analyse der Historie eines Notfalles vermieden werden.

Selbstverständlich erfolgt in der Bodenstation 8 nicht nur eine Auswertung bezüglich des Fahrzeugführer-Bestätigungsfeldes und der darin enthaltenen Informationsdaten, sondern auch eine fortlaufende Auswertung der Informationsdaten des Fahrzeug-Zustandfeldes der übertragenen Datenpakete 13. Bei bemerkenswerter Abweichung bestimmter Daten der verschiedenen Felder des Fahrzeug-Zustandsfeldes 17 erhält man ein Warn-Auswertergebnis-Schaltsignal, das, erfolgt eine Vorauswertung bereits im Flugzeug 1, im Flugzeug gebildet wird, oder, wenn die gesamte Auswertung in der Bodenstation 8 erfolgt, in der Bodenstation 8 gebildet und zu dem Flugzeug 1 über einen der Datenübertragungswege 6 oder 7 oder über beide Wege redundant übertragen wird. Dieses einem Wam-Auswertergebnis bezüglich des Fahrzeug-Zustandsfeldes 17 entsprechende Schaltsignal bewirkt, daß die Fahrzeug-Zustandsdaten fortlaufend über den Datenübertragungsweg 6 und den Satelliten 9 oder unmittelbar über den Datenübertragungsweg 7 zu der Bodenstation und/oder weiteren Bodenstationen übertragen und dort ausgewertet und auch fortlaufend über eine längere Zeitdauer hin gespeichert werden. Dies bedeutet, daß an die Stelle der an sich bekannten "Blackbox" im Flugzeug oder zusätzlich zu dieser eine Blackboxaufzeichnung in Zuordnung zu einem bestimmten der überwachten Flugzeuge in der Bodenstation 8 angelegt wird.

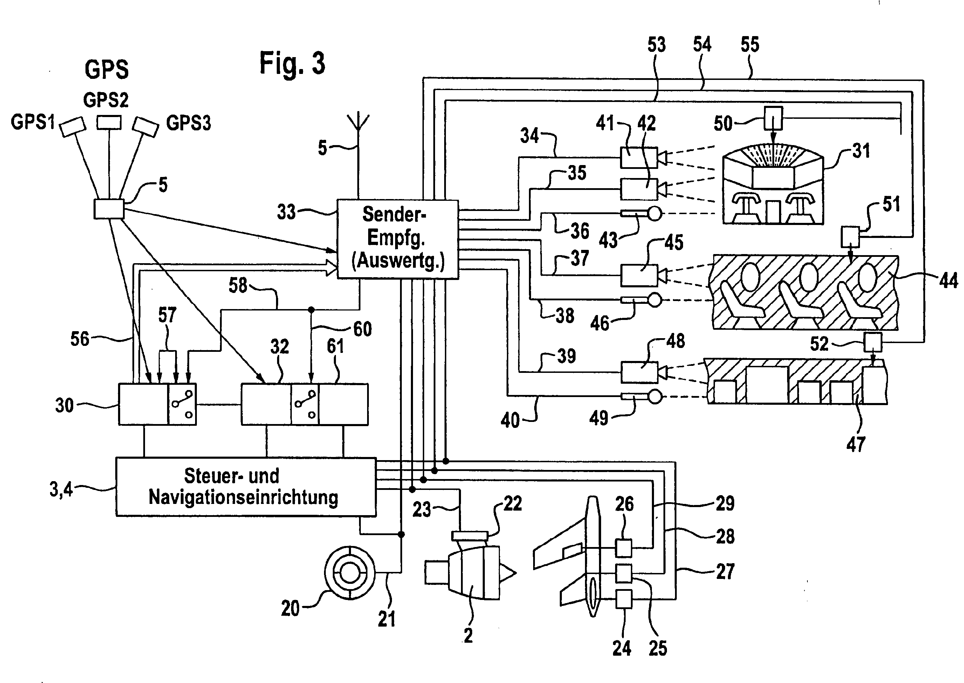

Fig. 3 läßt erkennen, in welcher Weise in dem Flugzeug 1 die Informationsdaten gewonnen werden, die in dem einzelnen Feldabschnitten des Fahrzeug-Zustandsfeldes 17 des Datenpaketes 13 eingeschrieben werden.

Das Flugzeug 1 enthält in allgemein bekannter Weise eine Inertialplattform oder einen Kreiselkompaß 20, von dem Daten bezüglich Kurs und Fluglage abgeleitet und über eine Leitung 21 dargeboten werden. Weiter sind den Triebwerken 2 Triebswerkssensoren 22 zugeordnet, die auf einer Leitung 23 den jeweiligen augenblicklichen Betriebszustand der Triebwerke signalisierende Betriebsdaten abgeben. Weiter sind Seitenrudersensoren 24, Trimmstellungssensoren 25 und Höhenrudersensoren 26 jeweils entsprechenden Steuerflächen des Flugzeugs zugeordnet und erzeugen entsprechende Ist-Stellungssignale auf Signalleitungen 27 bzw. 28 bzw. 29. Die Steuer- und Navigationseinrichtung 3, 4 erhält also über die Signalleitungen 21, 22 und 27 bis 29 sowie über weitere Signalleitungen, die mit für den Flugbetrieb wesentlichen Aufnahmesensoren verbunden sind, diejenigen Betriebs-Ist-Daten und Fluglagedaten, die am Führerstand 30 im Cockpit 31 des Flugzeugs 1 vom Piloten benötigt werden, um das Flugzeug 1 ordnungsgemäß zu steuern und zu lenken. Es handelt sich um dieselben Betriebs-Ist-Daten und Fluglagedaten, die auch der Autopiloten-Leitstand 32 in Verbindung mit einem Autopilotprogramm benötigt, um eine ordnungsgemäße Steuerung und Lenkung des Flugzeugs automatisch vorzunehmen.

Sämtliche Betriebs-Ist-Daten und Fluglagedaten, welche auf den Signalleitungen 21, 23, 27 bis 29 und weiteren Signalleitungen auftreten, werden digitalisiert, in das Datenpaket 13 eingefügt und der Sende-Empfangseinrichtung 33 des Flugzeugs zugeführt, um dann, gegebenenfalls nach Vorauswertung, über die Antennenarmanordnung 5 zur Aussendung zur Bodenstation 8 hin zu gelangen.

Außer den die Informationen über den Betriebs-Ist-Zustand des Fluggerätes und über die Fluglage enthaltenen Daten erreichen die Sende-Empfangseinrichtungen 33 auch noch optische und akustische Informationen in Gestalt digitalisierter elektrischer Signale über in Fig. 3 beispielsweise eingezeichnete Signalleitungen 34 bis 40. Diese Signalleitungen führen Signale entsprechend Informationen innerhalb des Fahrzeug-Zustands-Feldes 17 des Datenpaketes 13 über das Cockpit, über die Besatzung, über die Kabine bzw. die Passagiere in die Kabine, über die Ladung und über das Analysenergebnis von Gasanalysegeräten und Drucksensoren.

Im einzelnen sind auf die Führerstände des Cockpits beispielsweise zwei Videokameras 41 und 42 gerichtet und es ist im Cockpit 31 ein Mikrophon 43 installiert, wobei das Mikrophon 43 auch durch mehrere, auf bestimmte Bereiche des Cockpits 31 gerichtete Richtmikrophone ersetzt werden kann.

Auf die Passagierkabine 44 ist der Aufnahmebereich einer Videokamera 45 und eines Mikrophons 46 gerichtet. In entsprechender Weise ist auf den Laderaum 47 der jeweilige Aufnahmebereich einer Videokamera 48 und eines Mikrophons 49 gerichtet.

Drucksensoren und Gasanalysegeräte 50, 51 und 52 sind dem Cockpit 31 bzw. dem Kabinenraum 44 bzw. dem Laderaum 47 zugeordnet und liefern entsprechende Zustandsmeldesignale über Signalleitungen 53 bzw. 54 bzw. 55 an die Sende-Empfangseinrichtung 33.

Schließlich erhält die Sende-Empfangseinrichtung 33 auch noch von dem Führerstand 30 aus diejenigen Daten, welche, gegebenenfalls in Verbindung mit einer digitalen Signatur, das Fahrzeugführer-Bestätigungsfeld 18 des Datenpaketes 13 erfüllen, wobei diese Daten über einen Übertragungskanal oder eine Leitungsverbindung 56 von dem Führerstand 30 zu der Sende-Empfangseinrichtung 33 gelangen.

Eine Umschaltung von dem durch den Flugkapitän gesteuerten Betrieb auf den Autopilotenbetrieb kann unter regulären Umständen vom Führerstand 30 aus mittels eines Umschaltsignales auf der Leitung 57 vorgenommen werden, wobei diese Umschaltung vom Flugkapitän oder einem autorisierten Besatzungsmitglied vorgenommen und wieder rückgängig gemacht werden kann.

Stellt aber die Bodenstation 8 bei der Auswertung des Fahrzeugführer-Bestätigungsfeldes 18 des zu ihr übertragenen Datenpaketes 13 fest, daß dieses Fahrzeugführer-Bestätigungsfeld nicht ordnungsgemäß ausgefüllt ist, so wird von der Bodenstation entweder über den Datenübertragungsweg 6 oder über den Datenübertragungsweg 7 oder über beide Datenübertragungswege ein Umschaltsignal zu der Sende-Empfangseinrichtung 33 des betreffenden Flugzeugs übertragen, welches die Steuer- und Navigationseinrichtung von der Verbindung mit dem Führerstand 30 auf eine vom Führerstand aus nicht mehr beeinflußbare Verbindung mit dem Autopiloten-Leitstand 32 umschaltet, wobei dieses Umschaltsignal über eine Signalleitung 58, die vom Cockpit aus nicht zugänglich ist, oder über einen chiffrierten Datenübertragungskanal von dem Sende-Empfangseinrichtung 33 zu Umschalteinrichtungen geführt wird.

Diese Umschaltung kann nur durch ein wiederum von der Bodenstation 8 zum Flugzeug 1 gesendetes Rückschaltsignal rückgängig gemacht werden, das in der Bodenstation 8 dann erzeugt und ausgesendet wird, wenn die Auswertung des Fahrzeugführer-Bestätigungsfeldes 18 in der Bodenstation eine Rückkehr zu einer ordnungsgemäßen Fahrzeugführer-Bestätigung in einem der nächsten übertragenen Datenpakete ausgewiesen hat. Diese Auswertung, welche dann das Rückschaltsignal auslöst, kann, wie bereits gesagt, unter verschärften Kriterien vorgenommen werden.

Ist bei der weiteren Auswertung von zur Bodenstation 8 übertragenen Datenpaketen 13 nach Auftreten des die Umschaltung auf Autopilotenbetrieb bewirkenden Umschaltsignals kein Rückschaltsignal erzeugt worden und ergibt sich bei der Auswertung dieser weiteren Datenpakete 13 ein Alarm-Auswertergebnis bezüglich des Fahrzeug-Zustandsfeldes 17, dann wird über eine Signalleitung 60 ein in der Bodenstation 8 gebildetes und zur Sende-Empfangseinrichtung 33 des Flugzeugs 1 übertragenes Sonderumschaltsignal zu einem Umschalter des Autopiloten 32 geführt, welcher, vom Führerstand 30 des Flugzeugs aus nicht beeinflußbar, auf ein Sonder-Autopilotenprogramm umschaltet, das in Fig. 3 symbolisch bei 61 angedeutet ist, und welches eine Fahrtsituationkorrektur und/oder eine Kurskorrektur steuert.

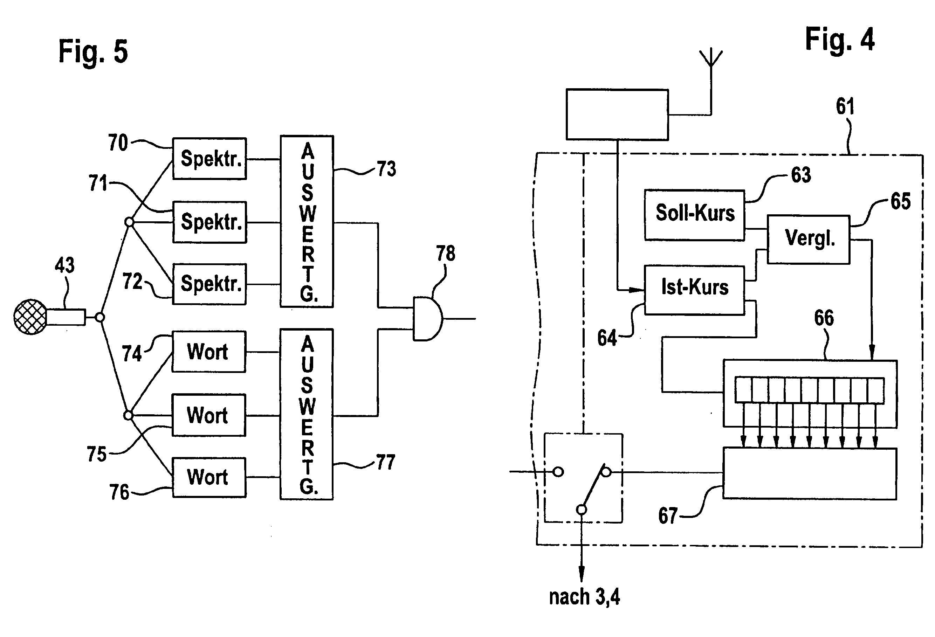

Die Wirkungsweise und Bedeutung dieser besonders zweckmäßigen Weiterbildung des hier angegebenen Überwachungs- und Steuersystem seien anhand Fig. 4 näher erläutert.

Ein Beispiel für eine akute Notsituation, welche bei der Auswertung der Datenpakete 13 in der Bodenstation 8 zu einem Alarm-Auswertergebnis bezüglich des Fahrzeugs-Zustandsfeldes 17 und/oder des Positionsfeldes 16 führt, ist eine wesentliche Abweichung des Kurses des Flugzeugs von einem Soll-Kurs, wobei zu befürchten ist, daß Terroristen sich in sekundenschnelle des Führerstandes bemächtigt haben, die Besatzung ausgeschaltet haben und einen neues Ziel ansteuern, um dort das betreffende Flugzeug zum Absturz zu bringen.

Tritt eine wesentliche Kursabweichung auf, so führt der Vergleich der Ausgänge eines Soll-Kursgebers 63 und eines Ist-Kursgebers 64 in einem Vergleicher 65 zu einem Vergleichssignal beträchtlichen Absolutwertes, wodurch die Abgabe eines Notsteuerprogrammes aus einem Notprogrammspeicher 66 ausgelöst wird. Welches der verschiedenen Notprogramme dann über einen Puffer 67 die Steuer- und Navigationseinrichtung 3, 4 erreicht, bestimmt sich in Abhängigkeit von dem Ist-Kurs, wozu ein Ausgang des Ist-Kursgebers 64 einem Programmauswahleingang des Notprogrammspeichers 66 zugeführt wird.

Die einzelnen Notprogramme bestimmen sich bezüglich der durch den Autopiloten zu steuernden Flughöhe und der Richtung nach der augenblicklichen tatsächlichen Position des Flugzeugs unmittelbar vor Übernahme der Steuerung durch den Autopiloten derart, daß das Flugzeug in Höhe und Richtung von möglichen Zielen einer terroristischen oder kriminellen Person oder Personengruppe abgelenkt werden kann, wobei ferner durch die Geschwindigkeitswahl und Höhenwahl sichergestellt ist, daß etwa bei Undichtigkeit der Flugzeugzelle Gesundheit und Leben der Passagiere geschützt werden, beim Überfliegen von Bergketten ein Aufschlag oder eine Kollision vermieden wird und möglicherweise das Flugzeug für eine Enterung von außen erreichbar bleibt.

Zur Gewinnung aussagekräftiger Auswertergebnisse aus biometrischen Aufnahmeverfahren, etwa zur Bildung der Daten im Fahrzeugführer-Bestätigungsfeld 18 oder auch zur Bildung der die Besatzung und die Passagiere betreffenden Informationen im Fahrzeug-Zustandfeldes 17 kann es zweckmäßig sein, biometrische Daten von einer Mehrzahl von Personen miteinander zu kombinieren. Ein Beispiel hierfür ist in Fig. 5 bezüglich der Ausgangssignale eines Mikrophons, beispielsweise des Mikrophons 43 im Cockpit 31, oder einer Mikrophongruppe, verdeutlicht. Die Mikrophonausgangssignale können einer Sprachschallanalyse mit Spektrumsfiltem 70, 71 und 72 und einer nachgeschalteten Auswerteinrichtung 73 unterzogen werden. Außerdem können die Mikrophon-Ausgangssignale Spracherkennungseinheiten 74, 75 und 76 und einer dieser nachgeschalteten Auswerteinrichtung 77 zugeführt werden. Die bei positiven Auswertergebnis ein Ausgangssignal führenden Ausgänge der Auswerteinrichtungen 73 und 77 werden einem UND-Gatter 78 zugeführt, das einen positiven Beitrag zu dem Fahrzeugführer-Bestätigungssignal zur Berücksichtigung im Fahrzeugführer-Bestätigungsfeld 18 liefert. Die Spektrumsanalysatoren 70 bis 72 sind auf den Sprachschall der Stimme des Piloten bzw. des Co-Piloten bzw. des technischen Offiziers, insbesondere nach einem rechnergesteuerten Lemprogramm, abgestimmt und die Spracherkennungseinheiten 74, 75 und 76 sind auf geheime, dem Piloten bzw. dem Co-Piloten bzw. dem ersten Offizier zugeteilte, auszusprechende Schlüsselwörter abgestimmt.

In einer zu der Schaltung nach Fig. 5 analogen Weise können auch Systeme zur Fingerabdruckerkennung oder Handabdruckerkennung, zur Augenerkennung und dergleichen in jeweiliger Zuordnung zu bestimmten Besatzungsmitgliedern aufgebaut sein.

Wie oben bereits angedeutet können verschärfte Auswertkriterien unter Verwendung von Schaltungen etwa nach Fig. 5 dann vorgegeben werden, wenn nach Feststellung einer nicht ordnungsgemäßen Fahrzeugführer-Bestätigung in einem Datenpaket 13 von der Bodenstation aus danach wieder eine Rückschaltung von Autopilotenbetrieb auf Fahrzeugführer gesteuerten Betrieb ausgelöst werden soll.

## Patentansprüche

1. Überwachungs- und Steuersystem für bemannte Fahrzeuge, welche eine Antriebseinrichtung (2), eine Steuereinrichtung (3) und Navigationseinrichtung (4) zur Positionsbestimmung und zur Fahrzeugzustandsbestimmung aufweisen, wobei die Steuereinrichtung (3) abhängig von Informationsdaten der Navigationseinrichtung (4) von einem Führerstand (30) aus oder, umschaltbar, von einem Autopiloten-Leitstand (32) aus, betätigbar ist und die Navigationseinrichtung mit einer Sensorgruppe zur Aufnahme von Fahrzeugzustands-Istdaten gekoppelt ist, wobei die Fahrzeugzustands-Istdaten über einen Satellitenübertragungsweg (6) zu einer Bodenstation (8) übertragbar und dort für eine bestimmte Zeitdauer speicherbar sind und abhängig von einem bestimmten Ergebnis der Auswertung der Fahrzeugzustands-Istdaten das Fahrzeug von der Bodenstation (8) aus femsteuerbar ist,
wobei ein Datenpaket (13), welches ein Fahrzeugkennzeichenfeld (14), ein Zeitanzeigefeld (15), ein fortlaufend aktualisiertes Positionsfeld (16), ein fortlaufend aktualisiertes Fahrzeug-Zustandsfeld (17) und ein Fahrzeugführerbestätigungsfeld (18) enthält, mittels Sende-/Empfangseinrichtungen (33) des Fahrzeugs (1) über den Satelitenübertragungsweg (6) und/oder direkt (7) zu der Bodenstation (8) in einem ersten Zeittakt übertragen wird, und das Datenpaket mittels einer im Fahrzeug oder in der Bodenstation (8) befindlichen Auswerteinrichtung zur Erzeugung dreier Auswertergebnisse auswertbar ist; derart, daß
abhängig von einem ersten bestimmten Auswertergebnis bezüglich des Fahrzeugführer-Bestätigungsfeldes (18) entsprechend Ordnungsmäßigkeit von Gestalt und Inhalt des Fahrzeugführer-Bestätigungsfeldes eine fortlaufende Speicherung der Datenpakete über eine bestimmte begrenzte Zeitdauer in der Bodenstation (8) erfolgt;
abhängig von einem zweiten bestimmten Auswertergebnis bezüglich des Fahrzeugführer-Bestätigungsfeldes (18) entsprechend einer Regelabweichung nach Form oder Inhalt des Fahrzeugführer-Bestätigungsfeldes eine fortlaufende Speicherung über eine gegenüber der bestimmten begrenzten Zeitdauer größere Zeitdauer in der Bodenstation (8) erfolgt, und gleichzeitig ein Umschaltsignal von der Bodenstation (8) über den, oder einen weiteren, Sateliten-Datenübertragungsweg (6) oder einen direkten Datenübertragungskanal (7) zu dem Fahrzeug (1) übertragen wird, welches die Steuereinrichtung (3) von der Kopplung mit dem Führerstand (30) auf eine vom Führerstand aus nicht beeinflußbare Kopplung mit dem Autopiloten-Leitstand (32) umschaltet; und
abhängig von einem dritten bestimmten Auswertergebnis eine Rückschaltung auf die Kopplung der Steuereinrichtung (3) mit dem Führerstand (30), vom Führerstand aus wiederum nicht beeinflußbar, nur durch ein Rückschaltsignal erfolgt, das abhängig von diesem dritten bestimmten die Rückschaltung rechtfertigenden Auswertergebnis bezüglich des Fahrzeugführer-Bestätigungsfeldes (18) des nächsten übertragenen Datenpaketes von der Bodenstation (8) erzeugt und zum Fahrzeug übertragen wird.

2. System nach Anspruch 1, **dadurch gekennzeichnet, daß** die Datenpakete (13) und/oder das Umschaltsignal und/oder das Rückschaltsignal zwischen Fahrzeug (1) und Bodenstation (8) in codierter Form übertragen wird bzw. werden.

3. System nach Anspruch 1 oder 2, **dadurch gekennzeichnet, daß** die Datenpakete (13) vom Fahrzeug (1) zur Bodenstation in komprimierter Form übertragen werden.

4. System nach einem der Ansprüche 1 bis 3, **dadurch gekennzeichnet, daß** abhängig vom zweiten Auswertergebnis die Zeittaktfrequenz der Datenpaketübertragung erhöht wird.

5. System nach einem der Ansprüche 1 bis 4, **dadurch gekennzeichnet, daß** abhängig von einem Wam-Auswertergebnis bezüglich des Fahrzeug-Zustandfeldes (17) die Fahrzeugszustandsdaten fortlaufend über den und/oder einen weiteren Satelliten-Datenübertragungsweg (6) und/oder unmittelbar (7) zu der Bodenstation (8) und/oder weiteren Bodenstationen übertragen, fortlaufend dort gespeichert und fortlaufend dort ausgewertet bzw. weiter ausgewertet werden.

6. System nach einem der Ansprüche 1 bis 5, **dadurch gekennzeichnet, daß** abhängig von einem Alarm-Auswertergebnis bezüglich des Fahrzeug-Zustandfeldes (17) und/oder des Positionsfeldes (16), insbesondere bei gleichzeitigem Auftreten des zweiten Auswertergebnisses bezüglich des Fahrzeugführer-Bestätigungsfeldes (18), ein Umschaltsignal auf ein Sonder-Autopilotenprogramm des Autopiloten (32) umschaltet, welches vom Führerstand aus nicht beeinflußbar eine Fahrtsituationskorrektur und/oder Kurskorrektur steuert.

7. System nach Anspruch 6, **dadurch gekennzeichnet, daß** das Sonder-Autopilotenprogramm (66) jeweils abhängig von Ist-Daten (64) der Fahrzeugposition gewählt ist.

8. System nach einem der Ansprüche 1 bis 7, **dadurch gekennzeichnet, daß** die Sensorgruppe mindestens ein im oder am Fahrzeug (1) installiertes Mikrophon (43, 46, 49) und/oder mindestens eine im oder am Fahrzeug installierte Bildaufnahmekamera (41, 42, 45, 48) und/oder mindestens einen in oder am Fahrzeug installierten Drucksensor und/oder mindestens einen im oder am Fahrzeug installierten Gasanalysator (50, 51, 52) enthält.

9. System nach Anspruch 8, **dadurch gekennzeichnet, daß** das mindestens ein Mikrophon (43, 46, 49) an eine Schallspektrum-Auswertgruppe (70-73) angeschlossen ist, welche Stimmerkennungsgeräte (70, 71, 72) enthält, deren Ausgänge derart verknüpft sind, daß eine positive Stimmerkennung des Fahrzeugführers und ihm zugeordneter Hilfskräfte eine Freigabe einer Fahrzeugführer-Bestätigung im Fahrzeugführer-Bestätigungsfeld (18) bewirkt.

10. System nach Anspruch 8 oder 9, **dadurch gekennzeichnet, daß** das mindestens eine Mikrophon (43, 46, 49) an eine Worterkennungs-Auswertgruppe (74-77) angeschlossen ist, welche Worterkennungsgeräte (74, 75, 76) enthält, deren Ausgänge derart verknüpft sind, daß eine positive Kennworterkennung des Fahrzeugführers und ihm zugeordneter Hilfskräfte eine Freigabe einer Fahrzeugführer-Bestätigung im Fahrzeugführer-Bestätigungsfeld (18) bewirkt.

11. System nach einem der Ansprüche 1 bis 10, **dadurch gekennzeichnet, daß** die Bodenstation (8) und/oder weitere Bodenstationen, welche jeweils in einer Auswerteinrichtung Datenpakete von den Sende-/Empfangseinrichtungen (33) von überwachten Fahrzeugen empfangen, Multiplexer enthalten, deren Takt über Satelliten-Übertragungswege (6) und/oder unmittelbar (7) synchron zu den Fahrzeugen zur Steuerung von deren Sende-/Empfangseinrichtungen (33) übertragen wird.

## Claims

1. A monitoring and control system for manned vehicles, comprising drive means (2), control means (3) and navigation means (4) for location determination and vehicle-status determination, wherein said control means (3) may be operated depending on information data of said navigation means (4) from a control station (30) or, in a switchable manner, from an autopilot control station (32), and said navigation means are linked with a set of sensors for obtaining actual-vehicle-state data, wherein said actual-vehicle-state data may be transmitted via a satellite transmission path (6) to a ground station (8) and be stored there for a particular period of time, and said vehicle may be remote-controlled from said ground station (8) depending on a particular evaluation result of said actual-vehicle-state data,
wherein a data packet (13) containing a vehicle identification field (14), a time indicator field (15), a continuously updated position field (16), a continuously updated vehicle-status field (17) and a pilot-confirmation field (18), is transmitted in a first timing by means of transmitter/receiver means (33) of said vehicle (1) via said satellite transmission path (6) and/or directly (7) to said ground station (8), and said data packet may be evaluated by evaluation means located in said vehicle or in said ground station (8) for the generation of three generation results; such that
depending on a first particular evaluation result concerning said pilot-confirmation field (18) corresponding to regular configuration and content of said pilot-confirmation field, continuous storing of said data packets is carried out over a limited period of time in said ground station (8);
depending on a second particular evaluation result concerning said pilot-confirmation field (18) corresponding to irregularity in terms of form and content of said pilot-confirmation field, continuous storing is carried out over a period of time longer in comparison with said particular limited in said ground station (8), and at the same time a switchover signal is transmitted from said ground station (8) via said one or via another satellite data transmission path (6) or a direct data transmission channel (7) to said vehicle (1), which switchover signal switches over said control means (3) from being linked with said control station (30) to being linked to said autopilot control station (32) without being subject to influence by the cockpit; and
depending on a third particular evaluation result, switching back to said control means (3) being linked with said control station (30) is only effected by a reset signal which again is not subject to influence by the cockpit, which reset signal is generated by said ground station (8), depending on said third particular switching back justifying evaluation result concerning said pilot-confirmation field (18) of the data packet transmittet next, and transmitted to said vehicle.

2. The system in accordance with claim 1, **characterized in that** said data packets (13) and/or said switchover signal and/or said reset signal is/are transmitted between vehicle (1) and ground station (8) in a coded form.

3. The system in accordance with claim 1 or 2, **characterized in that** said data packets (13) are transmitted from said vehicle (1) to said ground station in a compressed form.

4. The system in accordance with any one of claims 1 to 3, **characterized in that** the timing frequency of data packet transmission is increased depending on said second evaluation result.

5. The system in accordance with any one of claims 1 to 4, **characterized in that** depending on a warning evaluation result concerning said vehicle-status field (17), the vehicle-statues data is continuously transmitted via said one and/or another satellite data transmission path (6) and/or immediately (7) to said ground station (8) and/or additional ground stations, continuously stored there and continuously evaluated there or evaluated further, respectively.

6. The system in accordance with any one of claims 1 to 5, **characterized in that** depending on an alarm evaluation result concerning said vehicle-status field (17) and/or said position field (16), particularly in the event of a simultaneous occurrence of said second evaluation result concerning said pilot-confirmation field (18), a switchover signal switches over to a special autopilot program of said autopilot (32) that controls a travel situation correction and/or course correction in a manner not subject to being influenced by the control station.

7. The system in accordance with claim 6, **characterized in that** said special autopilot program (66) is respectively selected depending on actual data (64) of the vehicle position.

8. The system in accordance with any one of claims 1 to 7, **characterized in that** said set of sensors contains at least one microphone (43, 46, 49) installed in or on said vehicle (1) and/or at least one image recording camera (41, 42, 45, 48) installed in or on said vehicle and/or at least one pressure sensor installed in or on said vehicle and/or at least one gas analyzer (50, 51, 52) installed in or on said vehicle.

9. The system in accordance with claim 8, **characterized in that** said at least one microphone (43, 46, 49) is connected to a sound spectrum evaluation group (70-73) containing voice recognition apparatus (70, 71, 72), the outputs of which are linked such that a positive voice recognition of the pilot and supporting staff associated with the latter results in a release of a pilot conformation in said pilot-confirmation field (18).

10. The system in accordance with claim 8 or 9, **characterized in that** said at least one microphone (43, 46, 49) is connected to a word recognition evaluation group (74-77) containing word recognition apparatus (74, 75, 76), the outputs of which are linked such that a positive password recognition of the pilot supporting staff associated with the latter results in a release of a pilot confirmation in said pilot-confirmation field (18).

11. The system in accordance with any one of claims 1 to 10, **characterized in that** said ground station (8) and/or further ground stations, each of which receive data packets from said transmitter/receiver means (33) of monitored vehicles in evaluation means, contain multiplexers, the timings of which are transmitted synchronously via satellite transmission paths (6) and/or immediately (7) to said vehicles for controlling their transmitter/receiver means (33).

## Revendications

1. Système de surveillance et de commande pour véhicules habités comportant un dispositif de propulsion (2), un dispositif de commande (3) et un dispositif de navigation (4) pour la localisation et la détermination d'état du véhicule, le dispositif de commande (3) étant activable depuis un poste de conduite (30) ou, de façon commutable, depuis un poste de pilotage automatique (32) en fonction de données d'information du dispositif de navigation (4), le dispositif de navigation étant couplé à un groupe de capteurs pour la collecte de données effectives d'état du véhicule, lesdites données effectives d'état du véhicule étant transmissibles par canal de transmission satellitaire (6) à une station au sol (8) où elles sont mémorisables pour une durée définie, et le véhicule pouvant être commandé à distance de la station au sol (8) en fonction d'un résultat défini de l'évaluation des données effectives d'état du véhicule,
un paquet de données (13) comprenant un champ caractéristique de véhicule (14), un champ d'indication temporelle (15), un champ de position continuellement actualisé (16), un champ d'état de véhicule continuellement actualisé (17) et un champ de confirmation du conducteur du véhicule (18) étant transmis à la station au sol (8) au moyen de dispositifs émetteurs/récepteurs (33) du véhicule (1) via le canal de transmission satellitaire (6) et/ou directement (7) dans un premier cycle d'horloge, et le paquet de données étant évaluable au moyen d'un dispositif d'évaluation disposé dans le véhicule ou dans la station au sol (8) pour la génération de trois résultats d'évaluation ; de telle manière
qu'en fonction d'un premier résultat d'évaluation déterminé relatif au champ de confirmation du conducteur du véhicule (18), il soit suivant la régularité de la forme et du contenu du champ de confirmation du conducteur du véhicule procédé à une mémorisation continue des paquets de données pendant une durée précisément délimitée dans la station au sol (8) ;
qu'en fonction d'un deuxième résultat d'évaluation déterminé relatif au champ de confirmation du conducteur du véhicule (18), il soit suivant une irrégularité de forme ou de contenu du champ de confirmation du conducteur du véhicule procédé à une mémorisation courante pendant une durée supérieure à la durée de mémorisation continue dans la station au sol (8), et que soit simultanément transmis un signal de commutation de la station au sol (8) au véhicule (1) via le canal de transmission satellitaire ou un autre canal de transmission satellitaire (6), ou un canal de transmission directe (7), lequel commute le dispositif de commande (3) du couplage avec le poste de conduite (30) à un couplage avec le poste de pilotage automatique (32), non influençable par le poste de conduite ; et
qu'en fonction d'un troisième résultat d'évaluation déterminé, il soit retourné à un couplage également non influençable du dispositif de commande (3) avec le poste de conduite (30), exclusivement par un signal de commutation inverse généré et transmis au véhicule par la station au sol (8) en fonction de ce troisième résultat d'évaluation déterminé justifiant la commutation inverse et relatif au champ de confirmation du conducteur du véhicule (18) du paquet de données suivant.

2. Système selon la revendication 1, **caractérisé en ce que** les paquets de données (13) et/ou le signal de commutation et/ou le signal de rétrogradation sont transmis sous forme codée entre le véhicule (1) et la station au sol (8).

3. Système selon la revendication 1 ou 2, **caractérisé en ce que** les paquets de données (13) sont transmis sous forme comprimée du véhicule (1) à la station au sol.

4. Système selon l'une des revendications 1 à 3, **caractérisé en ce que** la cadence de la transmission de paquets de données est élevée en fonction du deuxième résultat d'évaluation.

5. Système selon l'une des revendications 1 à 4, **caractérisé en ce qu'**en fonction d'un résultat d'évaluation - d'alerte relatif au champ d'état de véhicule (17), les données d'état de véhicule sont constamment transmises via le canal de transmission satellitaire ou un autre canal de transmission satellitaire (6) et/ou directement (7) à la station au sol (8) et/ou à d'autres stations au sol, où elles sont continuellement mémorisées et continuellement évaluées ou évaluées consécutivement.

6. Système selon l'une des revendications 1 à 5, **caractérisé en ce qu'**en fonction d'un résultat d' évaluation - d'alerte relatif au champ d'état de véhicule (17) et/ou du champ de position (16), notamment en cas d'apparition simultanée du deuxième résultat d'évaluation relatif au champ de confirmation du conducteur du véhicule (18), un signal de commutation déclenche un programme de pilotage automatique spécifique du pilote automatique (32), lequel commande une correction de situation de conduite et/ou une correction de cours non influençable depuis le poste de conduite.

7. Système selon la revendication 6, **caractérisé en ce que** chaque programme de pilotage automatique spécifique (66) est sélectionné en fonction de données effectives (64) de position du véhicule.

8. Système selon l'une des revendications 1 à 7, **caractérisé en ce que** le groupe de capteurs comporte au moins un microphone (43, 46, 49) installé dans ou sur le véhicule (1) et/ou au moins une caméra de prise de vues (41, 42, 45, 48) installée dans ou sur le véhicule et/ou au moins un capteur de pression installé dans ou sur le véhicule et/ou au moins un analyseur de gaz (50, 51, 52) installé dans ou sur le véhicule.

9. Système selon la revendication 8, **caractérisé en ce qu'**au moins un microphone (43, 46, 49) est raccordé à un groupe d'évaluation de spectre acoustique (70-73) comprenant des appareils de reconnaissance vocale (70, 71, 72) dont les sorties sont reliées de telle manière qu'une reconnaissance vocale positive du conducteur de véhicule et de ses auxiliaires attribués déclenche une confirmation de conducteur dans le champ de confirmation du conducteur du véhicule (18).

10. Système selon la revendication 8 ou 9, **caractérisé en ce qu'**au moins un microphone (43, 46, 49) est raccordé à un groupe d'évaluation de reconnaissance de mots (74-77) comprenant des appareils de reconnaissance de mots (74, 75, 76) dont les sorties sont reliées de telle manière qu'une reconnaissance positive de mots de passe du conducteur de véhicule et de ses auxiliaires attribués déclenche une confirmation de conducteur dans le champ de confirmation du conducteur du véhicule (18).

11. Système selon l'une des revendications 1 à 10, **caractérisé en ce que** la station au sol (8) et/ou d'autres stations au sol recevant chacune dans un dispositif d'évaluation des paquets de données depuis des dispositifs émetteurs/récepteurs (33) de véhicules surveillés, comprennent des multiplexeurs dont les cadences d'horloge sont transmises aux véhicules de manière synchrone via des canaux de transmission satellitaire (6) et/ou directement (7), pour la commande de leurs dispositifs émetteurs/récepteurs (33).
